(19)

**Europäisches Patentamt**
**European Patent Office**
**Office européen des brevets**

(11) **EP 4 676 035 A1**

(12) **EUROPEAN PATENT APPLICATION**

(43) Date of publication:
**07.01.2026  Bulletin 2026/02**

(21) Application number: **24306076.1**

(22) Date of filing: **02.07.2024**

(51) International Patent Classification (IPC):
**H04N 19/11** *(2014.01)*     **H04N 19/593** *(2014.01)*

(52) Cooperative Patent Classification (CPC):
**H04N 19/11; H04N 19/176; H04N 19/593**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **CHEN, Ya**
  **35700 RENNES (FR)**
• **NASER, Karam**
  **35250 MOUAZE (FR)**
• **LE LEANNEC, Fabrice**
  **35830 BETTON (FR)**
• **RADOSAVLJEVIC, Milos**
  **35000 RENNES (FR)**

(74) Representative: **Interdigital**
  **Immeuble ZEN 2**
  **845 A, avenue des Champs Blancs**
  **35510 Cesson-Sévigné (FR)**

(54) **METHOD AND APPARATUS FOR ENCODING/DECODING WITH MIP2 IN INTRA MODE CANDIDATES LIST**

(57)     In various implementations, method and devices are disclosed encode or decode a block of a picture using a weighted combination involving at least one intra prediction derived from an intra mode candidates list that includes a matrix based intra prediction mode MIP2. For instance, the weighted combination involving at least one intra prediction includes a geometric partitioning mode GPM among a plurality of geometric partitioning modes including GPM-Intra, Spatial Geometric Partitioning Mode SGPM, Intra Block Copy geometric partitioning mode IBC-GPM. For instance, a weighted combination involving at least one intra prediction includes a Combined Inter-Intra Partition CIIP, or an Intra Block Copy with Combined Inter-Intra Partition IBC-CIIP.

700

701 — a weighted combination with at least one intra prediction ?

NO

YES

702 — constructing an intra mode candidates list including MIP2 mode

703 — selecting an intra prediction mode

704 — obtaining a predicted block

705 — Encoding/decoding based on predicted block

**FIG. 7**

EP 4 676 035 A1

**Description**

TECHNICAL FIELD

The present embodiments generally relate to a method and an apparatus for video encoding or decoding using a weighted combination involving at least one intra prediction.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

In various implementations, methods and devices are disclosed that encode or decode a block of a picture using a weighted combination involving at least one intra prediction; and responsive to determining that the block is coded using a weighted combination involving at least one intra prediction constructing an intra mode candidates list that includes at least one intra mode candidate that is matrix based intra prediction mode, selecting an intra mode from the intra mode candidates list, obtaining a predicted block from a weighted combination of a first intra prediction based on the selected intra mode and of a second prediction; and encoding or decoding the block based on the predicted block.

According to a first aspect, a method of video encoding/decoding is disclosed wherein the weighted combination involving at least one intra prediction includes a geometric partitioning mode GPM among a plurality of geometric partitioning modes including GPM-Intra, Spatial Geometric Partitioning Mode SGPM, Intra Block Copy geometric partitioning mode IBC-GPM.

According to a second aspect, a method of video encoding/decoding is disclosed wherein a weighted combination involving at least one intra prediction includes a Combined Inter-Intra Partition CIIP, or an Intra Block Copy with Combined Inter-Intra Partition IBC-CIIP.

One or more embodiments also provide an apparatus for encoding/decoding video comprising one or more processors and at least one memory coupled to said one or more processors, wherein said one or more processors are configured to perform the encoding method according to any of the embodiments described herein.

One or more embodiments also provide a computer program comprising instructions which when executed by one or more processors cause the one or more processors to perform the encoding method according to any of the embodiments described herein. One or more of the present embodiments also provide a computer readable storage medium having stored thereon instructions for encoding or decoding a video according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates an example of a block with a neighboring reference template considered for MIP2.

FIG. 5 illustrates the 64 partitions of a Geometric Partitioning Mode (GPM) of a block (CU) in WC.

FIG. 6(a), FIG. 6(b) and FIG. 6(c) illustrate the 3 Intra Prediction Modes IPM candidates in GPM-Intra.

FIG. 7 illustrate a generic method for video encoding or video decoding using a weighted combination involving at least one intra prediction according to an embodiment.

FIG. 8 illustrates different examples of neighboring blocks for inheriting intra prediction mode.

FIG. 9 illustrates an example of different positions and an inclusion order of the spatial non-adjacent neighboring candidates.

FIG. 10 illustrates a position of a collocated block of a block in a collocated picture with an example of additional positions and inclusion order according to a variant embodiment.

## DETAILED DESCRIPTION

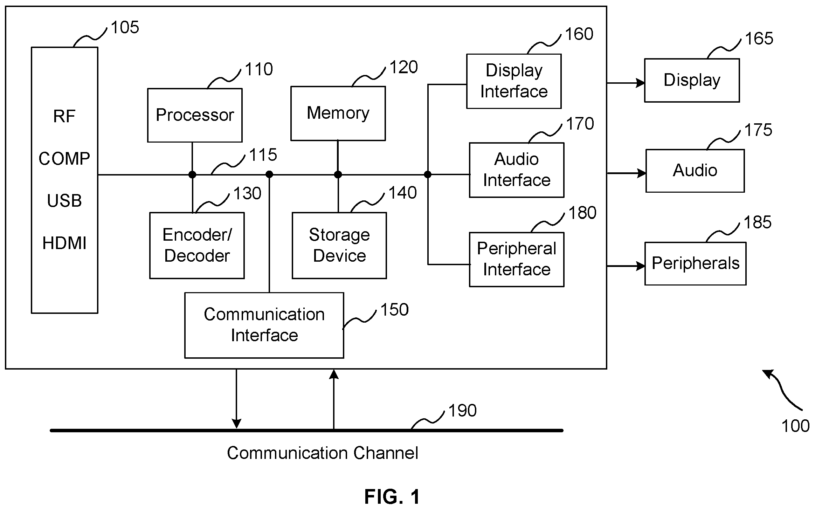

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/-decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or WC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802.11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

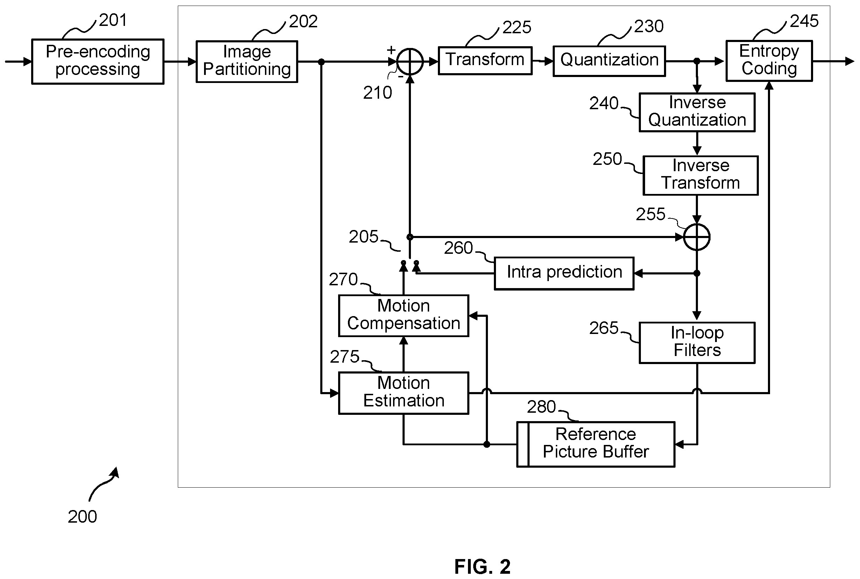

FIG. 2 illustrates an example video encoder 200, such as a WC (Versatile Video Coding) encoder. FIG. 2 may also illustrate an encoder in which improvements are made to the WC standard or an encoder employing technologies similar to WC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression. Metadata can be associated with the pre-processing, and attached to the bitstream.

In the encoder 200, a picture is encoded by the encoder elements as described below. The picture to be encoded is partitioned (202) and processed in units of, for example, CUs. Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. After prediction, prediction enhancement (285) is applied to the prediction block. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) or linear (ex: Wiener adaptive linear filter, ALF) filtering to reduce encoding artifacts. The filtered image is stored at a reference picture buffer (280).

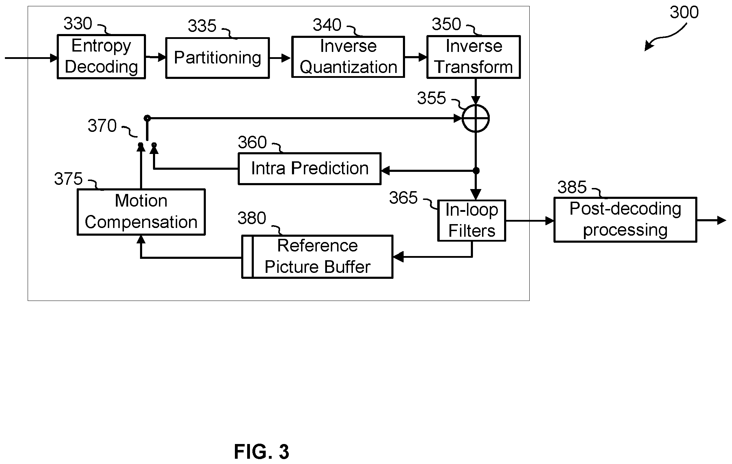

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). After prediction, prediction enhancement (390) is applied to the prediction block. In-loop filters (365) are applied to the reconstructed image. The filtered image is stored at a reference picture buffer (380).

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

Recent additions to video compression technology include various industry standards, versions of the reference software and/or documentations such as Enhanced Compression Model (ECM) being developed by the JVET (Joint Video Exploration Team) group. The aim is to make further improvements to the existing WC (Versatile Video Coding) standard. The current development of ECM includes various refinements for Intra Prediction that are detailed in the following.

Feature(s) associated with new matrix intra prediction mode (MIP2) are provided herein.

For instance, JVET-AH0209 introduces a new version of matrix intra prediction mode MIP2 using a matrix of weights (similar to MIP mode of ECMM/C). In MIP2, an intra prediction is obtained from a matrix product of a matrix of weights with the neighbor reference template, the matrix of weights being selected among a set of matrices based on template cost. As in TIMD, a SATD between the intra prediction and the template of the block is calculated, and the matrix of weights with the minimum SATDs is selected.

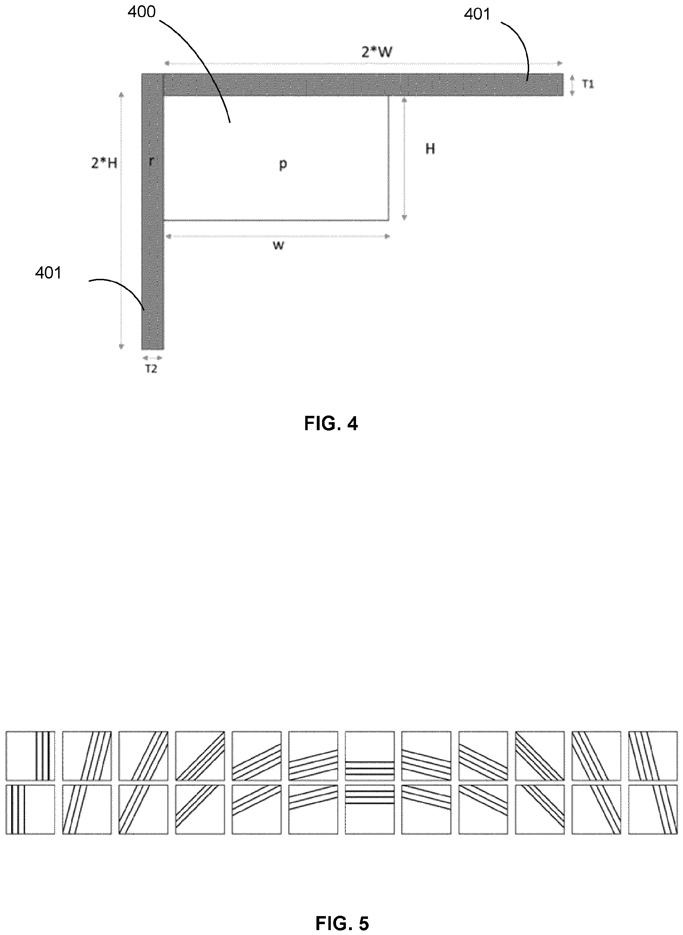

FIG. 4 illustrates an example of a block 400 and neighbor reference template 401 considered for MIP2. MIP2 is defined for certain block dimensions and replaces some of the conventional intra modes. The weights are multiplied by the neighbor reference template 401 to derive the prediction samples replacing conventional intra prediction. The weights are applied to the reference samples of the L shaped causal neighborhood template 401 as shown in the FIG. 4.

The reference samples in the causal neighborhood are denoted as r, and F(x,y) is the matrix of weights. Then the prediction P(x,y) can be derived as:

$$P(x,y) = \sum_k F(x,y,k)*r(k),$$

where k denotes the index of the reference sample in the template.

For instance, this prediction may be used for block size with both width and height up to 32 (except for 4x32, 32x4, 8x32 and 32x8). For instance, the template size (T1 and T2) is 2 for blocks with both width and height up to 16 and it is only used for mode 0 (DC), 1 (Planar), and directional modes of index 2+2*k. For other blocks (ie block larger than 16 in at least a dimension 32X32, 32x16, 16X32) template size is set to 1 and the mode is used for mode 0 (DC), 1 (Planar), and directional modes of index 2+4*k. The prediction is only performed for 16x16 positions, and the rest of the samples are generated by bilinear interpolation.

Feature(s) associated with Geometric Partitioning Mode (GPM) are provided herein.

FIG. 5 illustrates the 64 partitions of a Geometric Partitioning Mode (GPM) of a block (CU) in WC. In WC, the geometric partitioning mode (GPM) has been proposed with 64 partitions in total for inter prediction. When the GPM is used, a block (CU) is split into two partitions by a geometrically located straight line (as examples shown in FIG. 5). Each partition in the CU is inter-predicted using its own motion parameters. Only uni-prediction is allowed for each partition, that is, each partition has one motion vector (MV) and one reference index. After predicting each of the partitions, the sample values along the splitting edge are adjusted using a blending process with adaptive weights.

In the latest development of ECM, it has been proposed to adapt GPM with intra prediction GPM-Intra. To that end, some intra modes may be allowed for GPM to combine an inter prediction with an intra prediction.

In GPM with inter (GPM) and intra prediction (GPM-Intra), the final prediction samples are generated by weighting inter predicted samples and intra predicted samples for each GPM-separated region. The inter predicted samples are derived by the same scheme as the GPM in the current VVC and ECM whereas the intra predicted samples are derived by an intra prediction mode (IPM) candidate list and an index signaled from the encoder.

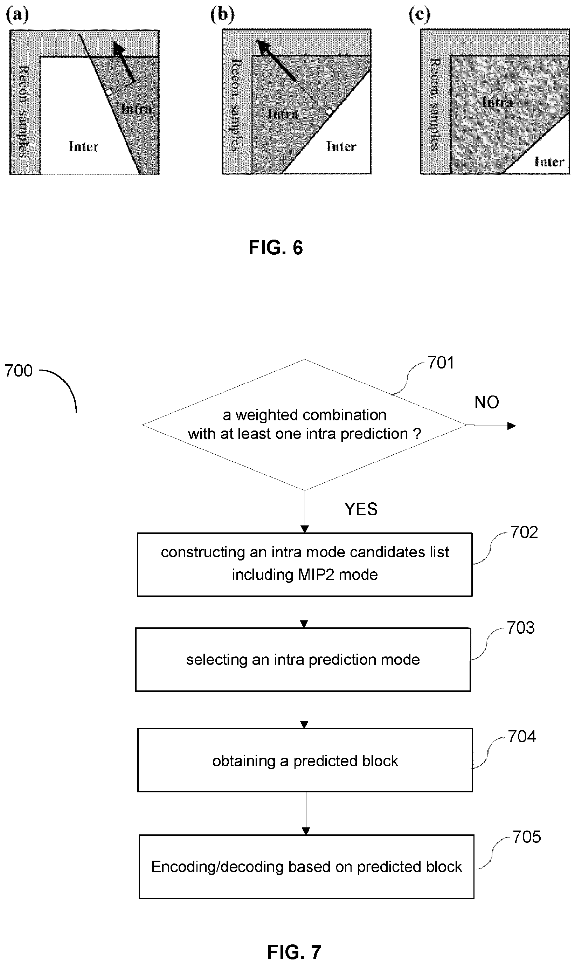

FIG. 6(a), FIG. 6(b) and FIG. 6(a) illustrate the 3 Intra Prediction Modes IPM candidates in GPM-Intra. For instance, the IPM candidate list size may be pre-defined as 3. The initial available IPM candidates are the parallel angular mode against the GPM block boundary (Parallel mode as shown on FIG. 6(a)), the perpendicular angular mode against the GPM block boundary (Perpendicular mode as shown on FIG. 6(b)), and the Planar mode as shown on 6(c).

Besides, the latest development of ECM further includes decoder-side intra mode derivation (DIMD) and Template-based intra mode derivation (TIMD), and those 2 modes may also be used for IPM candidates of GPM-Intra to further improve the coding performance.

The Parallel mode may be registered first, then IPM candidates of TIMD, DIMD, and neighboring blocks, and the Planar mode, may be registered if there is not the same IPM candidate in the list. The available IPM may be registered in following order:

> 1) Parallel mode;
> 2) one derived mode from DIMD;
> 3) one derived mode from TIMD;
> 4) five candidates derived from the neighboring blocks;
> 5) and the Planar mode.

Another similar mode recently introduced in the latest development of ECM is the Spatial geometric partitioning mode (SGPM). SGPM is an intra mode that resembles the inter coding tool of GPM, where the two prediction parts are generated from intra predicted process. For each partition mode, an IPM list is derived for each part. The IPM list size may be pre-defined as 3. The available IPM candidates may be:

> 1) two derived modes from TIMD with horizontal and vertical orientations;
> 2) Parallel mode;
> 3) one derived mode from DIMD;
> 4) five candidates derived from the neighboring blocks;
> 5) and the Planar mode.

The neighboring mode derivation is restricted by the angle of SGPM block boundary.

Finally, Intra block copy with geometry partitioning mode (IBC-GPM) is a coding tool which divides a CU into two sub-partitions geometrically. The prediction signals of the two sub-partitions are generated using IBC and intra prediction. An IPM candidate list is constructed using the same method as GPM-Intra for intra prediction, and the IPM candidate list size may also be pre-defined as 3.

Feature(s) associated with Combined inter and intra prediction (CIIP) are provided herein.

The Combined Inter/Intra Prediction CIIP mode, as its name indicates, combines an inter prediction with an intra prediction. The inter prediction in the CIIP mode $P_{inter}$ is derived using the same inter prediction process applied to regular merge mode; and the intra prediction $P_{intra}$ is using TIMD derived intra prediction mode.

In the TIMD derivation method used to derive the intra prediction mode in CIIP, the intra prediction mode with the smallest sum of absolute transformed differences (SATD) values in the TIMD mode list is selected and mapped to one of the 67 regular intra prediction modes.

Then, the intra and inter predictions are combined using weighted averaging where the weights are calculated depending on the derived intra prediction mode.

A variant of CIIP (IBC-CIIP) proposes to combine Intra Block Copy IBC and intra prediction. IBC-CIIP is a coding tool for an IBC coded block which uses IBC and intra prediction to obtain two predictions, and the two predictions are weighted summed to generate the final prediction.

An IPM candidate list is used to generate the intra prediction, and the IPM candidate list size may be pre-defined as 2. An IPM index is signaled to indicate which IPM is used. The available IPM candidates could be:

> 1) derived mode from TIMD;
> 2) the Planar mode;
> 3) and the Horizontal mode (HOR_IDX).

It is desirable to take the new MIP2 mode into consideration for GPM and CIIP modes with intra prediction to improve the coding performance.

The present document proposes a method for improving intra prediction part of some geometric partitioning modes (GPMs) and combined inter/intra prediction modes (CIIPs) with including the new matrix intra prediction mode (MIP2). Advantageously, the method exhibits a good tradeoff for GPM/CIIP modes between complexity and performance in the usage of MIP2.

In a first embodiment, the intra prediction mode (IPM) candidates used for GPM with inter and intra prediction (GPM-Intra), spatial geometric partitioning mode (SGPM), intra block copy with geometry partitioning mode (IBC-GPM), and combined intra block copy and intra prediction (IBC-CIIP) are adapted to take into consideration the MIP2 mode.

In a second embodiment, the MIP2 mode may be obtained from some adjacent spatial and non-adjacent spatial neighboring blocks, or from an history-based intra prediction mode table, or from a temporal neighboring block.

In a third embodiment, the MIP2 mode may be derived with the TIMD derivation method and may be used to generate the intra predicted samples of CIIP.

A generic embodiment for video encoding or video decoding using a weighted combination involving at least one intra prediction such as Geometric Partitioning Modes (GPMs) and Combined Inter/Intra Prediction modes (CIIPs) mode.

FIG. 7 illustrate a generic method for video encoding or video decoding using combination of at least one intra prediction according to an embodiment. The method 700 of FIG. 7, may be implemented in an encoder of FIG. 2 or a decoder of FIG. 3. The method may determine whether a block is coded using a weighted combination involving at least one Intra prediction. For instance, the weighted combination of prediction involves one intra prediction and one non-Intra prediction (i.e. Inter prediction, IBC prediction...). According to a first variant, a weighted combination involving at least one intra prediction includes a geometric partitioning mode GPM among a plurality of geometric partitioning modes such as GPM-Intra, Spatial Geometric Partitioning Mode SGPM, Intra Block Copy geometric partitioning mode IBC-GPM. According to a second variant, a weighted combination involving at least one intra prediction includes a Combined Inter-Intra Partition CIIP and Intra Block Copy with Combined Inter-Intra Partition IBC-CIIP. For instance, in a decoder, the method may obtain such indication from a syntax element encoded in the bitstream. For instance, in an encoder, the method may determine that a block is to be encoded with this prediction mode, for example based on RD cost, the information is then signaled to a decoder for instance as a syntax element in the bitstream. Responsive 701 to determining that the block is coded using such weighted combination mode, in a step 702 a list of intra prediction mode candidates is constructed that includes a matrix based intra prediction mode as described hereafter according to various exemplary embodiments. Then, in a step 702, an intra prediction mode is obtained from the intra prediction mode candidates list. In the variant where there may be more than one intra prediction mode candidates list, a list index may be signalled to indicate which list is selected. In another variant, an index may be further signalled to indicate which candidate in the list is used for this block. Then in a step 704, a first intra prediction of the block is obtained from the selected intra prediction mode and, a final predicted block is obtained by combining the first intra prediction and a second prediction. Depending on the different variants of the weighted combination, the second prediction may be an intra prediction or an inter prediction or an IBC prediction. Finally, in a step 705, the block is encoded or decoded by using the predicted block.

Feature(s) associated with MIP2 mode for IPM list used for GPM-Intra/SGPM/IBC-GPM are provided herein.

As previously described, an intra prediction mode (IPM) list with 3 entries may be constructed for generating the intra prediction used for one sub-partition of GPM-Intra, SGPM and IBC-GPM. These first 3 available and non-redundant IPM candidates may be registered in the IPM list in a pre-defined order. For GPM-Intra and IBC-GPM, an index may be signaled into the bitstream to indicate which IPM candidate is applied.

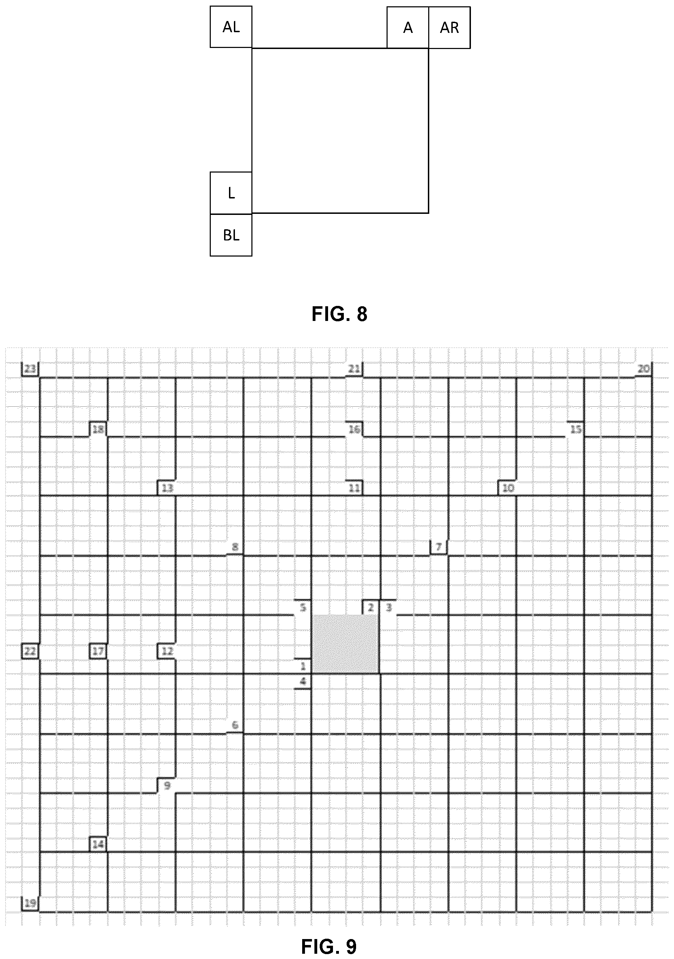

According to a first embodiment, the available MIP2 candidates are included in the IPM list used for GPM-Intra, SGPM and IBC-GPM. A more optimal IPM list is thus advantageously constructed. For example, an MIP2 mode may be added prior to the Planar mode when constructing the IPM list for SGPM. FIG. 8 illustrates different examples of neighboring blocks for inheriting prediction mode. Specially, when obtaining the candidate of the IPM list from the intra modes of the above (A), left (L), below-left (BL), above-right (AR), and above-left (AL) neighboring blocks, check if it is mappable to MIP2 mode, if it is an MIP2 mode, adding it to the IPM list rather than ignoring it.

In one variant of the first embodiment, MIP2 modes from some non-adjacent spatial neighbouring blocks may be considered for the IPM list construction. FIG. 9 illustrates an example of different positions and an inclusion order (6-23) of the spatial non-adjacent neighboring candidates. For instance, the distances between non-adjacent spatial candidates and current coding block are based on the width and height of current coding block.

In another variant of the first embodiment, MIP2 modes from history-based intra prediction mode table may be considered for the IPM list construction. For example, a history-based MIP2 table with a pre-defined size N (e.g., $N = 6$) may be maintained to include a recently used MIP2 modes during the encoding/decoding process. The table is reset (emptied) when a new CTU row is encountered. Whenever there is a GPM-Intra/SGPM/IBC-GPM coded block, the MIP2 mode at the last entry of the table may be added to the IPM candidate list.

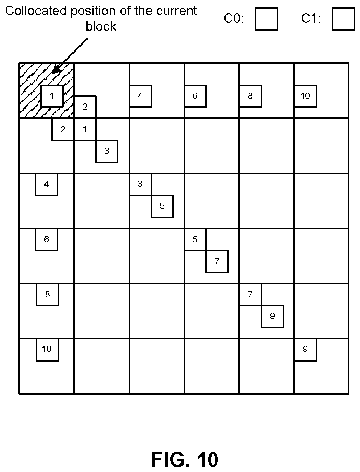

In another variant of the first embodiment, MIP2 modes from temporal neighboring blocks (e.g., collocated block of the current block) may be considered for the IPM list construction, for the GPM-Intra/SGPM/IBC-GPM coded block in inter-slice (i.e., P/B slice). These temporal MIP2 candidates may be selected from the collocated picture. FIG. 10 illustrates a position of a collocated block of a block in a collocated picture with an example of additional positions and inclusion order according to a variant embodiment. For instance, FIG. 10 depicts positions and inclusion order of the temporal MIP2 candidates, which are the same as those for temporal candidates in inter merge mode. The definition of a collocated picture is also the same as that in WC: the index of the collocated reference picture list and the reference index to be used for derivation of the co-located CU is explicitly signaled in the slice header. More generally, a collocated block in a picture from any of the picture in the reference picture lists may be used. An inclusion order of the temporal MIP2 candidates is as follows: C01, then C02, ..., then C010. If C0i with $1 \leq i \leq 10$ is not available (i.e., the position of C0i is outside of picture/slice boundary, or outside of the current CTU row) and C1i is available, C1i will be used to replace C0i with $1 \leq i \leq 10$. Otherwise (both C0i and C1i are not available), the next inclusion position is checked.

Feature(s) associated with generating the intra predicted samples of CIIP/IBC-CIIP with MIP2 mode are provided herein.

As previously described, MIP2 mode may be involved to generate the intra predicted samples of CIIP/IBC-CIIP. For example, the TIMD derivation method may still be used to derive the intra prediction mode in CIIP. Specifically, check the intra prediction mode with the smallest sum of absolute transformed differences (SATD) values in the TIMD mode list to see if it is mappable to MIP2 mode. If in this case, the intra predicted samples of CIIP may be generated with this MIP2 mode.

In one variant of the second embodiment, MIP2 modes from some adjacent spatial and non-adjacent spatial neighbouring blocks, or from history-based intra prediction mode table, or from temporal neighboring blocks (e.g., collocated block of the current block), may be considered for the IPM list construction used for the IBC-CIIP.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the motion compensation module (270) of a video encoder 200 as shown in FIG. 2. Moreover, the present aspects are not limited to ECM and WC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Note that the syntax elements as used herein are descriptive terms. As such, they do not preclude the use of other syntax element names.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types.

**Claims**

1. A method for video decoding, comprising:

   determining whether a block is coded using a weighted combination involving at least one intra prediction; and
   responsive to determining that the block is coded using a weighted combination involving at least one intra prediction:

      constructing an intra mode candidates list that includes at least one intra mode candidate that is matrix based intra prediction mode;

selecting an intra mode from the intra mode candidates list;

obtaining a predicted block from a weighted combination of a first intra prediction based on the selected intra mode and of a second prediction; and

decoding the block based the predicted block.

2. A method for video encoding, comprising:

determining whether a block is coded using a weighted combination involving at least one intra prediction;

responsive to determining that the block is coded using a weighted combination involving at least one intra prediction:

constructing an intra mode candidates list that includes at least one intra mode candidate that is matrix based intra prediction mode;

selecting an intra mode from the intra mode candidates list;

obtaining a predicted block from a weighted combination of a first intra prediction based on the selected intra mode and of a second prediction; and

encoding the block based the predicted block.

3. A device for video decoding comprising one or more processors configured to determine whether a block is coded using a weighted combination involving at least one intra prediction;

responsive to determining that the block is coded using a weighted combination involving at least one intra prediction:

construct an intra mode candidates list that includes at least one intra mode candidate that is matrix based intra prediction mode;

select an intra mode from the intra mode candidates list;

obtain a predicted block from a weighted combination of a first intra prediction based on the selected intra mode and of a second prediction; and

decode the block based the predicted block.

4. A device for video encoding one or more processors configured to

determine whether a block is coded using a weighted combination involving at least one intra prediction;

responsive to determining that the block is coded using a weighted combination involving at least one intra prediction:

construct an intra mode candidates list that includes at least one intra prediction mode candidate that is matrix based intra prediction mode;

select an intra prediction mode from the intra mode candidates list;

obtain a predicted block from a weighted combination of a first intra prediction based on the selected intra prediction mode and of a second prediction; and

decode the block based the predicted block.

5. The method of any of claims 1-2 or the device of any of claims 3-4, wherein the weighted combination of at least one intra prediction includes a geometric partitioning mode GPM among a plurality of geometric partitioning modes including GPM-Intra, Spatial Geometric Partitioning Mode SGPM, Intra Block Copy geometric partitioning mode IBC-GPM.

6. The method of any of claims 1-2, 5 or the device of any of claims 3-5, wherein a predicted block is obtained from a prediction of a first GPM partition and a prediction of a second GPM partition.

7. The method of any of claims 1-2 or the device of any of claims 3 or 4, wherein the weighted combination of at least one intra prediction includes a Combined Inter-Intra Partition CIIP, or an Intra Block Copy with Combined Inter-Intra Partition IBC-CIIP.

8. The method of any of claims 1-2, 5-7 or the device of any of claims 3-7, the matrix based intra prediction mode included in the intra mode candidates list is a matrix based intra prediction mode from one of an adjacent spatial block, a non-adjacent spatial neighbouring block, or an history-based intra prediction mode, or from a temporal neighboring block.

9. The method of any of claims 1-2, 5-8 or the device of any of claims 3-8 wherein an intra prediction according to a matrix based intra prediction mode is obtained from a matrix product of a matrix of weights with a neighbor reference template, the matrix of weights being selected among a set of matrices based on template cost.

**FIG. 1**

FIG. 2

FIG. 3

FIG. 4

FIG. 5

**(a)**

**(b)**

**(c)**

## FIG. 6

700

701

a weighted combination
with at least one intra prediction ?

NO

YES

702

constructing an intra mode candidates list
including MIP2 mode

703

selecting an intra prediction mode

704

obtaining a predicted block

705

Encoding/decoding based on predicted block

## FIG. 7

**FIG. 8**

**FIG. 9**

FIG. 10

**EUROPEAN SEARCH REPORT**

Application Number

EP 24 30 6076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COBAN M ET AL: "Algorithm description of Enhanced Compression Model 8 (ECM 8)", 141. MPEG MEETING; 20230116 - 20230120; ONLINE; (MOTION PICTURE EXPERT GROUP OR ISO/IEC JTC1/SC29/WG11), , no. m62440 ; JVET-AC2025 6 April 2023 (2023-04-06), XP030308550, Retrieved from the Internet: URL:https://dms.mpeg.expert/doc_end_user/documents/141_Teleconference/wg11/m62440-JVET-AC2025-v1-JVET-AC2025.zip JVET-AC2025-v1.docx [retrieved on 2023-04-06] | 1-7 | INV. H04N19/11 H04N19/593 |
| Y | * 3.1.9 * * 3.1.10 * * 3.1.14 * ----- | 8,9 | |
| Y | WO 2024/131801 A1 (MEDIATEK INC [CN]) 27 June 2024 (2024-06-27) * paragraph [0079] - paragraph [0120] * ----- | 8,9 | |
| A | WO 2024/091002 A1 (WILUS INST STANDARDS & TECH INC [KR]) 2 May 2024 (2024-05-02) * paragraph [0327] - paragraph [0351] * ----- | 1-4 | TECHNICAL FIELDS SEARCHED (IPC) H04N |

The present search report has been drawn up for all claims

| Place of search | Date of completion of the search | Examiner |
|---|---|---|
| The Hague | 25 November 2024 | Cooke, Edward |

## ANNEX TO THE EUROPEAN SEARCH REPORT
## ON EUROPEAN PATENT APPLICATION NO.

EP 24 30 6076

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| WO 2024131801 A1 | 27-06-2024 | NONE | |
| WO 2024091002 A1 | 02-05-2024 | NONE | |

EPO FORM P0459

For more details about this annex : see Official Journal of the European Patent Office, No. 12/82